# EUROPÄISCHE PATENTSCHRIFT

(11) **EP 2 783 136 B1**
(45) Veröffentlichungstag und Bekanntmachung des Hinweises auf die Patenterteilung: **12.07.2023**
(21) Anmeldenummer: 12761543.3
(22) Anmeldetag: 31.08.2012
(51) Int. Cl.: F16H 57/00, F16C 3/02, F16H 55/06

(54) **ZAHNRAD MIT FEST VERBUNDENER ANTRIEBSWELLE**
GEAR WITH RIGIDLY CONNECTED DRIVESHAFT
ROUE DENTÉE À ARBRE D'ENTRAÎNEMENT SOLIDAIRE

(30) Priorität: 26.11.2011 DE 102011119514
(43) Veröffentlichungstag der Anmeldung: 01.10.2014
(60) Teilanmeldung: 23176654.4
(73) Patentinhaber: KAP Precision Components GmbH, 36043 Fulda (DE)
(72) Erfinder: KASTRUP, Michael, 79189 Bad Krozingen (DE)
(74) Vertreter: Aera A/S
(86) Internationale Anmeldenummer: PCT/EP2012/003664
(87) Internationale Veröffentlichungsnummer: WO 2013/075763

(56) Entgegenhaltungen:
- EP-A2- 0 492 477
- EP-A2- 0 606 140
- DE-A1-102006 026 568
- JP-A- 2003 021 224
- JP-U- S5 555 653
- US-A- 3 241 391
- US-A- 3 369 851
- US-A- 5 632 684
- US-B1- 6 241 619
- US-B2- 7 383 750

## Beschreibung

Die Erfindung betrifft ein Zahnrad drehfest auf einer Antriebswelle, wobei das Zahnrad aus gespritztem Kunststoff besteht und die Antriebswelle aus einem vom Zahnrad unterschiedlichem Kunststoffmaterial besteht.

Bekannt sind Zahnräder aus Kunststoff aus unterschiedlichen Anwendungsgebieten, in denen eine Leistung übertragen oder die Kraftrichtung verändert werden soll. Der Einsatz von Kunststoffzahnrädern erfolgt dabei in Anwendungsgebieten, in denen eine geringere Leistung übertragen wird. Dies ist der Fall, da Kunststoffzahnräder eine geringere Leistung übertragen können als Metallzahnräder. Der Einsatz von Getrieben die Kunststoffzahnräder enthalten ist ebenfalls in Leichtbaugetriebe vorgesehen, da hierdurch Gewicht eingespart werden kann. Einsatzgebiete sind hierbei neben mobilen Werkzeugen, Küchengeräte sowie Spielzeuge.

Zum Einsatz kommen Kunststoffzahnräder ebenfalls in Getrieben, um einen geräuscharmen Antriebsstrang zu gewährleisten. Beim Eingriff von Metallzahnradzähnen ineinander und dem Abrollen der Metallzähne gegeneinander treten Abwälzgeräusche auf. Durch den Einsatz von Kunststoffzahnrädern kann die Geräuschentwicklung reduziert werden.

JP S55 55623 U offenbart ein einstückig geformtes Zahnrad aus verschiedenen Kunststoffen, bestehend aus einem aus hartem Kunststoff geformten Wellenteil und einem aus weichem Kunststoff geformten Zahnradteil, in das das Wellenteil eingesetzt ist. Es wird eine Welle gezeigt, die im Verbindungsbereich im Vergleich zum Endbereich vergrößert ist und das Zahnrad den vergrößerten Bereich umschließt. Das Zahnrad wird in einem Taktzug eingesetzt, der von einem Schrittmotor in Rotation schlagend angetrieben wird. Bei einer Uhr, bei der ein Schrittmotor verwendet wird, wird der Rotor stoßartig vorwärts bewegt, daher entsteht ein hackendes Geräusch zwischen dem Rotoritzel und dem zweiten Rad.

Das oben genannte Zahnrad erweist sich als effektiv bei der Verminderung des hackenden Geräusches und stellt zudem ein besonders verschleißbeständiges Zahnrad zur Verfügung.

Die Getriebe- oder auch Antriebswellen, auf denen sich die Zahnräder befinden, sind aus Metall. Metall findet als Wellenmaterial hierbei deswegen vorzugsweise Verwendung, da Antriebswellen bei der Leistungsübertragung und Leistungswandlung durch Zahnräder bei jeder Umdrehung eine Biegebelastung erfahren und Metallwellen eine gute Langzeitbiegestabilität aufweisen.

Weiterhin werden Antriebswellen aus gehärtetem und oder legiertem Stahl verwendet, da diese eine erhöhte Dauerfestigkeit, einen verbesserten Korrosionsschutz sowie eine verbesserte Reibfestigkeit in den Lagerstellen aufweisen. Die Verwendung von legierten und gehärteten Stählen für Wellen ermöglicht hierbei auch das die Wellen, nach entsprechender Bearbeitung, eine hohe Oberflächengüte aufweisen können. Der Einsatz von vergüteten und gehärteten Stählen ist ebenfalls bei Getrieben, die nur eine geringe Leistung übertragen müssen von Vorteil. Hierbei weist die Welle dann an den Abstütz- bzw. Lagerstellen eine derart hohe Oberflächengüte auf, dass die Welle mit den Kontaktstellen des Getriebegehäuses ein Gleitlager, mit dem Gleitmittel Luft, bildet. Hierdurch kann auf den Einsatz von Wälzlagern für die Getriebelagerung verzichtet werden.

Um Welle und Zahnrad zu verbinden, gibt es verschiedene Verbindungstechniken. Am verbreitetsten sind die folgenden beiden Arten: Die Kunststoffzahnräder werden entweder auf die Wellen aufgepresst, sodass eine Presspassung die Höhe der möglichen Leistungsübertragung zwischen Welle und Zahnrad bestimmt, oder zwischen Welle und Zahnrad ist konstruktiv eine formschlüssige Verbindung wie z. B. durch eine Welle-Nabe-Verbindung in Form einer Keilwelle vorgesehen.

Die Verbindung von Kunststoffzahnrad und Metallantriebswelle weist hierbei jedoch verschiedene Nachteile auf. Aufgrund der unterschiedlichen Materialeigenschaften einer Metallwelle und eines Kunststoffzahnrades verhalten sich die jeweiligen Molekülgitter bei Belastung unterschiedlich. Dies führt dazu, das Lastspitzen die Verbindungsstelle von Welle und Zahnrad lockern oder beschädigen können. Somit wird die Höhe der übertragbaren Leistung kontinuierlich reduziert.

Ein weiterer Nachteil ist, dass die Herstellung einer veredelten gehärteten Antriebswelle ein aufwendiges kostenintensives mehrstufiges Verfahren ist. Hohe Materialkosten liegen auch deshalb vor, da das Veredeln des Stahles teuer ist. Durch Materialoptimierung der Kunststoffmaterialien und neue Fertigungsverfahren ist es zudem möglich, immer stabilere Zahnräder zu fertigen. Die Verwendung von Metallwellen bei Kunststoffgetrieben zeigt, das ein Versagen des Getriebes mittlerweile häufig auf einen Bruch, z. B. durch Sprödbruch, der Welle zurückzuführen ist. Dies tritt insbesondere dabei auf, wenn der Antriebsstrang blockiert ist und eine Lastspitze beim Anlaufen der Getriebewelle auftritt.

Aufgabe der Erfindung ist es, die zuvor genannten Nachteile des Standes der Technik zu beheben. Vorrangig ist hierbei die Bereitstellung eines Zahnrades mit fest verbundener Welle, welche keine Verbindungsstelle aufweist, die durch eine Dauerbelastung ermüdet oder zerstört wird.

Diese Aufgabe wird durch das gemäß Anspruch 1 definierte Zahnrad mit Antriebswelle gelöst.

Vorteilhaft bei der Verwendung von Kunststoff für die Antriebswelle ist, dass der Wellenwerkstoff im Vergleich zu Metall elastischer ist und die Gefahr von Sprödbruch bei Lastspitzen geringer ist. Die Langzeitstabilität aufgrund einer besseren Biegeelastizität ist ebenfalls deutlich erhöht.

Vorteilhafterweise treten bei einer Antriebswelle aus Kunststoff auch keine Korrosionsprobleme auf, da nur noch nicht korrodierende Materialien im Getriebe zum Einsatz kommen.

Von Vorteil ist, dass der Einsatz von Kunststoffwellen im Vergleich zu Metallwellen das Gewicht weiter reduziert.

Von Vorteil ist, dass Kunststoff Schallwellen und somit Geräusche schlechter leitet, als Metall. Durch den Einsatz von Kunststoffwellen wird die Körperschallleitung innerhalb des Getriebes weiter reduziert und auch der abgestrahlte Geräuschpegel wird reduziert.

Von Vorteil ist die Beschichtung der Antriebswelle für Speziallacke, wie z. B. Hartschichtlacke die Mithilfe von UV-Trocknung ausgehärtet werden. An den notwendigen Stellen der Antriebswelle können somit Reib- und Gleiteigenschaften der Wellenoberfläche verbessert werden, um somit z. B. in der Lagerstelle der Welle eine Gleitlagerfunktionalität zwischen Antriebswelle und Gehäuse zu ermöglichen. Der Verbindungsbereich der Antriebswelle weist gemäß der vorliegenden Erfindung die Form einer Scheibe auf, da somit ein gleichmäßiges Umspritzen des Zahnrades möglich ist. Dies wird dadurch erreicht werden, indem der Verbindungsbereich der Welle die Form einer koaxialen Ringscheibe besitzt.

Durch Vorsprünge, Ausnehmungen, Öffnungen und/oder Anflachungen am äußeren Umfang und/oder an mindestens einer Seitenfläche der Scheibe besteht nach dem Umspritzen des Zahnrades ein guter Formschluss zwischen Antriebswelle und Zahnrad.

Gemäß der vorliegenden Erfindung, weist die Scheibe an mindestens einer Seitenfläche Öffnungen auf, wobei am äußeren Umfang der Scheibe Zähne vorstehen und die Scheibe als Stirnzahnrad ausgeführt ist.

Von Vorteil ist es, wenn das Verhältnis von Wellendurchmesser zum Scheiben- oder Zahnraddurchmesser 1 :3 bis 1 :5 beträgt. Hierdurch ist ein gutes Verhältnis von der möglichen Leistungsbeaufschlagung zur Materialmenge vorgegeben. Durch die Verwendung einer Hohlwelle für die Antriebswelle kann Material eingespart werden, bei gleichzeitig erhöhter Biegestabilität und Leistungsstabilität. Ein Ausführungsbeispiel der Erfindung ist in den Zeichnungen dargestellt und wird im Folgenden näher beschrieben.
- Figur 1:: Perspektivische Ansicht der Antriebswelle

- Figur 2:: Draufsicht auf die Antriebswelle
- Figur 3:: Perspektivische Ansicht von verbundenem Zahnrad und Antriebswelle
- Figur 4:: Darstellung von Zahnrad mit fest verbundener Antriebswelle
- Figur 5:: Draufsicht auf Zahnrad und Antriebswelle

Figur 1 zeigt eine Variante der Antriebswelle 1 in einer perspektivischen Abbildung. Die Antriebswelle 1 weist an dem zum Betrachter hin gerichtetem Wellenende 2 eine Torxform auf, die Teil einer Kupplungseinrichtung 3 zum Verbinden mit weiteren Komponenten des Antriebsstranges ist. Von diesem Wellenende hin zu dem vom Betrachter abgewandten Wellenende 4 erstreckt sich ein Wellenabschnitt der Kunststoffwelle mit glatter Oberfläche 5. An den Wellenabschnitt 5 grenzt der vergrößerte Wellendurchmesser 6 an. Dieser ist in der dargestellten Variante in Form eines Stirnzahnrades ausgeführt, welches Öffnungen 7 aufweist. Die dargestellte Antriebswelle 1 ist als Hohlwelle ausgeführt.

Figur 2 zeigt die Antriebswelle 1 in der Draufsicht. Erkennbar ist die Dreiteilung der Antriebswelle 1 in Wellenende in Torxform als der Kupplungseinrichtung 3, der Wellenabschnitt der Kunststoffwelle mit glatter Oberfläche 5 und der vergrößerte Wellendurchmesser 6. In dieser Variante wird der Lack zur Optimierung der Oberflächengüte u.a. im Wellenabschnitt der Kunststoffwelle mit glatter Oberfläche 5 aufgebracht.

In Figur 3 wird in einer perspektivischen Ansicht gezeigt, wie das Zahnrad 3, welches als Stirnzahnrad ausgeführt ist, die Antriebswelle 1 umschließt. Das Zahnrad umschließt dabei gleichzeitig auch die als Stirnrad mit Öffnungen 7 ausgeführte Variante des vergrößerten Wellendurchmessers 6. Aufgrund der teilweisen transparenten Darstellung des Zahnrades ist ersichtlich, wie das Material des Zahnrades 3 beim Spritzgießen sowohl die Zahnzwischenräume 8 als auch die Öffnungen 7 des vergrößerten Wellendurchmessers 6 ausfüllt, um eine gute kraftschlüssige unlösbare Verbindung herzustellen.

Die Figur 4 stellt das Zahnrad 3 mit der fest verbundenen Antriebswelle 1 in einer perspektivischen Ansicht wie zuvor in Figur 3 dar. Hier ist jedoch das Zahnrad nicht teilweise transparent dargestellt. Dargestellt ist in dieser Abbildung eine Verlängerung der Welle um einen Wellenabsatz 9 welcher in dieser Ausführungsform des Zahnrades beim Spritzgießen des Zahnrades entsteht. Der Wellenabsatz 9 ist entsteht z. B. nicht, wenn das Zahnrad nicht an einem der Wellenenden 2 oder 4 sondern mehr in Richtung der Wellenmitte die Welle umschließt.

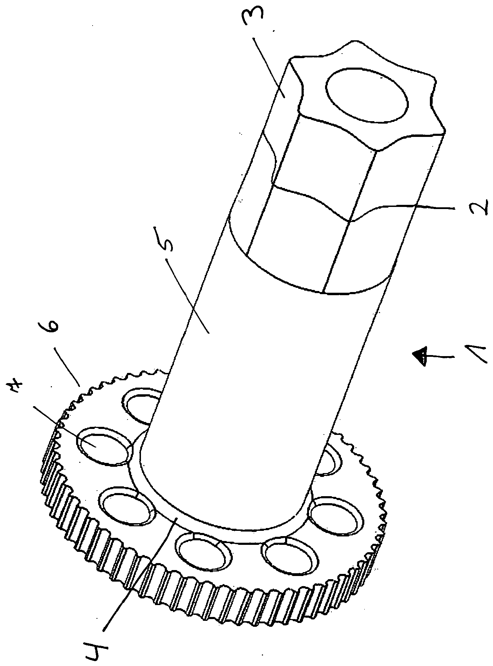

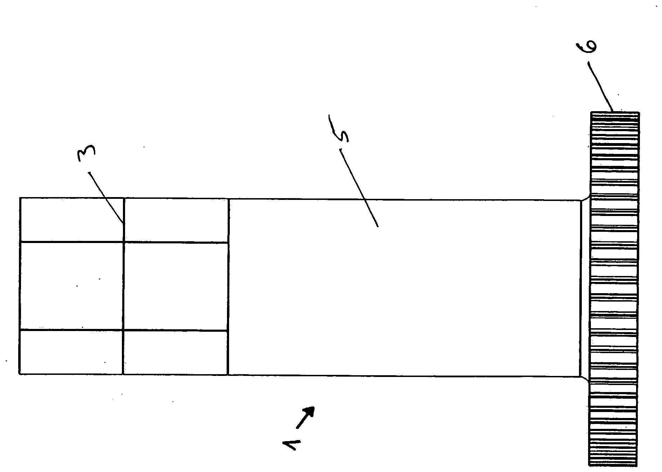

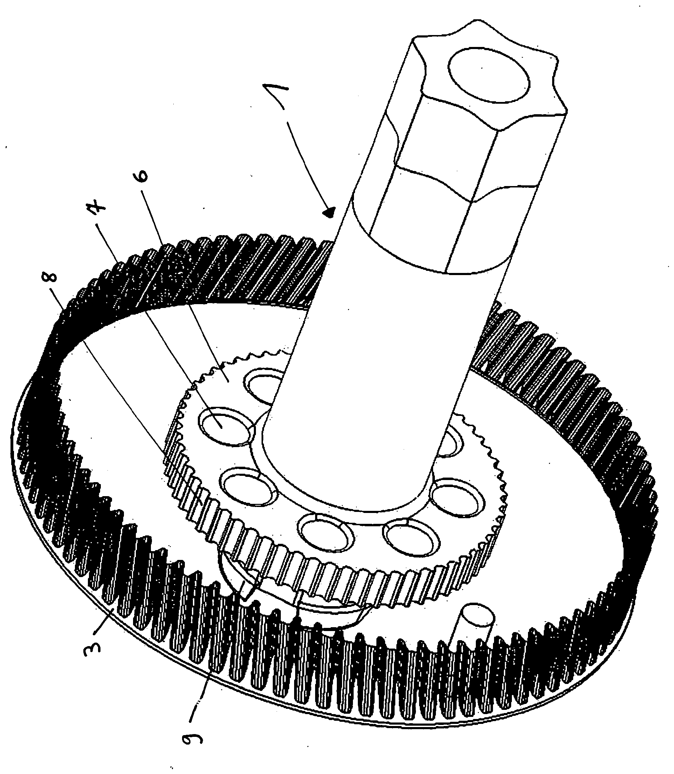

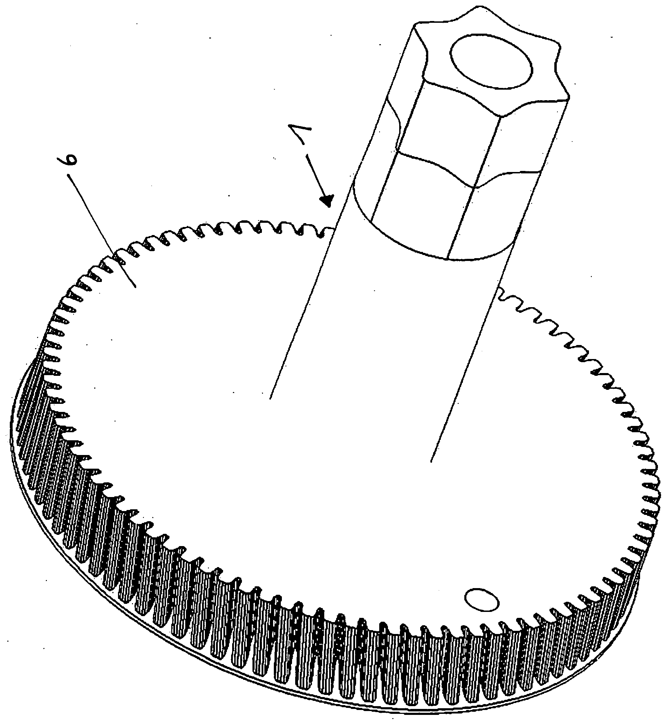

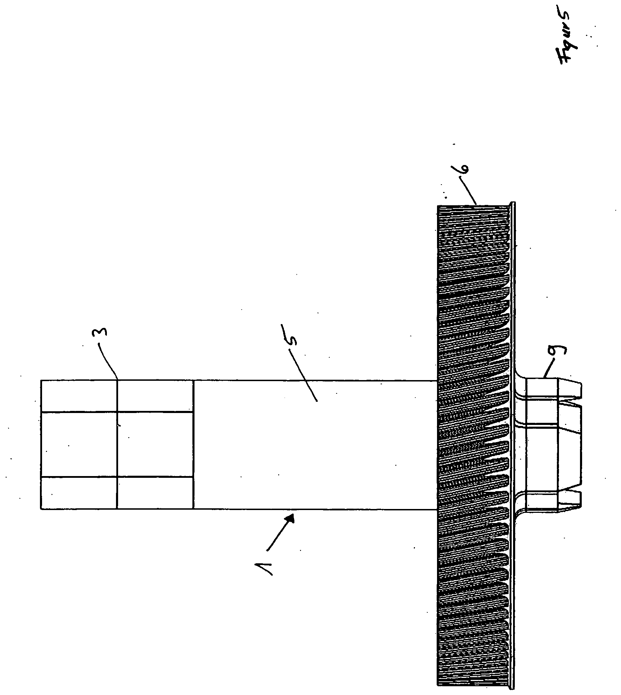

Figur 5 zeigt eine Draufsicht auf das Zahnrad 3 mit der fest verbundenen Antriebswelle 1. Je nach Oberflächenbeschaffenheit der Ausführungsart kann der Wellenabsatz 9 wie der Bereich 5 mit Lack versehen werden, um eine gute Lagerstelle zu bieten.

Weitere Merkmale der beanspruchten Erfindung sind wie folgt:
Der Verbindungsbereich der Welle weist die Form einer koaxialen Ringscheibe auf.

Der Verbindungsbereich ist eine Scheibe, die Öffnungen an mindestens einer Seitenfläche aufweist. Am äußeren Umfang der Scheibe sind Zähne angeordnet. Die Scheibe ist ein Stirnzahnrad.

In einer weiteren Ausführungsform , die nicht die Erfindung darstellt, ist der Verbindungsbereich eine Scheibe, die Vorsprünge, Ausnehmungen und/oder Anflachungen am äußeren Umfang und/oder an mindestens einer Seitenfläche aufweist.

In anderen Ausführungsformen beträgt das Verhältnis von Wellendurchmesser zum Scheiben- oder Zahnraddurchmesser 1 :3 bis 1 :5. Der Wellendurchmesser wird bei größeren zu übertragenden Leistungen größer und bei kleineren zu übertragenden Leistungen kleiner. Hierdurch kann konstruktiv auf den Einsatzzweck abgestimmt die verwendete Materialmenge begrenzt werden, um Gewicht und Materialkosten zu sparen.

In einer weiteren nicht dargestellten Ausführungsform wird die Welle als Vollwelle ausgeführt.

In einer besonderen Ausführungsform ist das Zahnrad ein Stirnrad.

Eine Ausführungsform beinhaltet, dass die Welle mit einem Kunststofflack beschichtet ist.

In einer anderen Ausführungsvariante ist die Welle nur im Bereich der Lagerstellen mit einem Kunststofflack beschichtet.

Eine andere Ausführungsvariante beinhaltet, dass die Beschichtung mit einem Lack erfolgt, der durch Trocknung ausgehärtet wird und eine harte und glatte Oberfläche aufweist.

Eine Ausführungsvariante beinhaltet, dass das Zahnrad mit seiner Welle im Mehrkomponenten-Spritzgußverfahren oder Einlegeverfahren hergestellt ist.

Je nach Anwendungszweck ist das Kunststoffmaterial des Zahnrades in den möglichen Ausführungsvarianten vorzugsweise aus Polyoxymethylen, Polyamid, Polybutylenterephthalat, Polyphenylensulfid, Polyetheretherketon oder Polypropylen.

Je nach Anwendungszweck ist das Kunststoffmaterial der Welle vorzugsweise aus Polyoxymethylen, Polyamid, Polybutylenterephthalat, Polyphenylensulfid, Polyetheretherketon oder Polypropylen.

## Patentansprüche

1. Zahnrad mit Antriebswelle (1), wobei das Zahnrad (3) drehfest auf der Antriebswelle (1) angeordnet ist, wobei das Zahnrad (3) aus gespritztem Kunststoff besteht und die Antriebswelle (1) aus einem vom Zahnrad unterschiedlichen Kunststoffmaterial besteht, wobei
die Welle (1) vom Zahnrad (3) umspritzt ist,
die Welle (1) aus Kunststoff besteht und der Kunststoff des Zahnrades (3) eine höhere Elastizität besitzt als der Kunststoff der Welle, und
die Welle (1), im Verbindungsbereich, an dem die Welle (1) vom Zahnrad (3) umspritzt ist, einen den Wellendurchmesser vergrößernden Verbindungsbereich (6) aufweist,
wobei der Verbindungsbereich (6) der Welle die Form einer koaxialen Ringscheibe besitzt,
wobei die Scheibe Öffnungen (7) an mindestens einer Seitenfläche aufweist, wobei am äußeren Umfang der Scheibe Zähne vorstehen und
der Verbindungsbereich (6) in Form eines Stirnzahnrades ausgeführt ist, welches die besagten Öffnungen (7) aufweist,
so dass das Material des Zahnrades beim Spritzgießen sowohl die Zwischenräume (8) der Zähne als auch die Öffnungen (7) des als Stirnzahnrad ausgestalteten vergrößerten Wellendurchmessers (6) ausfüllt, um eine kraftschlüssige unlösbare Verbindung herzustellen.

2. Zahnrad (3) mit Antriebswelle (1) nach Anspruch 1, **dadurch gekennzeichnet, dass** die Welle (1) eine Hohlwelle ist.

3. Zahnrad (3) mit Antriebswelle (1) nach einem der vorangehenden Ansprüche, **dadurch gekennzeichnet, dass** das Zahnrad (3) ein Stirnrad ist.

4. Zahnrad (3) mit Antriebswelle (1) nach einem der vorangehenden Ansprüche, **dadurch gekennzeichnet, dass** das Kunststoffmaterial des Zahnrades (3) aus Polyoxymethylen, Polyamid, Polybutylenterephthalat, Polyphenylensulfid, Polyetheretherketon oder Polypropylen besteht.

5. Zahnrad (3) mit Antriebswelle (1) nach einem der vorangehenden Ansprüche, **dadurch gekennzeichnet, dass** das Kunststoffmaterial der Welle (1) aus Polyoxymethylen, Polyamid, Polybutylenterephthalat, Polyphenylensulfid, Polyetheretherketon oder Polypropylen besteht.

## Claims

1. Gearwheel having driveshaft (1), wherein the gearwheel (3) is situated in a rotationally-fixed manner on the driveshaft (1), wherein the gearwheel (3) consists of injection-molded plastic and the driveshaft (1) consists of a plastic material different from the gearwheel, wherein
the shaft (1) is encapsulated by the gearwheel (3),
the shaft (1) consists of plastic and the plastic of the gearwheel (3) has a higher elasticity than the plastic of the shaft, and
the shaft (1), in the connection area, at which the shaft (1) is encapsulated by the gearwheel (3), has a connection area (6) enlarging the shaft diameter,
wherein the connection area (6) of the shaft has the shape of a coaxial ring disk,
wherein the disk has openings (7) on at least one lateral surface, wherein teeth protrude on the outer circumference of the disk, and
the connection area (6) is embodied in the form of a spur gearwheel, which includes said openings (7),
so that the material of the gearwheel, during the injection molding, fills both the intermediate spaces (8) of the teeth and the openings (7) of the enlarged shaft diameter (6) designed as a spur gearwheel in order to produce a friction-locked non-detachable connection.

2. Gearwheel (3) having driveshaft (1) according to claim 1, **characterized in that** the shaft (1) is a hollow shaft.

3. Gearwheel (3) having driveshaft (1) according to any one of the preceding claims, **characterized in that** the gearwheel (3) is a spur gear.

4. Gearwheel (3) having driveshaft (1) according to any one of the preceding claims, **characterized in that** the plastic material of the gearwheel (3) consists of polyoxymethylene, polyamide, polybutylene terephthalate, polyphenylene sulfide, polyether ether ketone, or polypropylene.

5. Gearwheel (3) having driveshaft (1) according to any one of the preceding claims, **characterized in that** the plastic material of the shaft (1) consists of polyoxymethylene, polyamide, polybutylene terephthalate, polyphenylene sulfide, polyether ether ketone, or polypropylene.

## Revendications

1. Roue dentée avec arbre d'entraînement (1), dans laquelle la roue dentée (3) est montée solidairement sur
l'arbre d'entraînement(1), dans laquelle la roue dentée (3) est composée de plastique moulé par injection et l'arbre d'entraînement (1) est composé d'une matière plastique différente de la roue dentée, dans laquelle
l'arbre (1) est encapsulé par la roue dentée (3),
l'arbre (1) est composé de plastique et le plastique de la roue dentée (3) possède une plus grande élasticité que le plastique de l'arbre, et
l'arbre (1), dans la zone de liaison où l'arbre (1) est encapsulé par la roue dentée (3), présente une zone de liaison (6) qui augmente le diamètre de l'arbre,
dans laquelle la zone de liaison (6) de l'arbre se présente sous la forme d'un disque annulaire coaxial,
dans laquelle le disque présente des ouvertures (7) sur au moins une face latérale, dans laquelle des dents font saillie sur la périphérie extérieure du disque et
la zone de liaison (6) est réalisée sous la forme d'une roue d'engrenage à denture droite présentant lesdites ouvertures (7), de sorte que le matériau de la roue dentée remplit, lors du moulage par injection, à la fois les espaces (8) entre les dents et les ouvertures (7) du diamètre d'arbre élargi (6) conçu comme une roue d'engrenage à denture droite afin de créer une liaison indissociable par friction.

2. Roue dentée (3) avec arbre d'entraînement (1) selon la revendication 1, **caractérisée en ce que** l'arbre (1) est un arbre creux.

3. Roue dentée (3) avec arbre d'entraînement (1) selon l'une quelconque des revendications précédentes, **caractérisée en ce que** la roue dentée (3) est une roue à denture droite.

4. Roue dentée (3) avec arbre d'entraînement (1) selon l'une des revendications précédentes, **caractérisée en ce que** la matière plastique de la roue dentée (3) est composée de polyoxyméthylène, polyamide, polybutylène téréphtalate, polysulfure de phénylène, polyétheréthercétone ou polypropylène.

5. Roue dentée (3) avec arbre d'entraînement (1) selon l'une des revendications précédentes, **caractérisée en ce que** la matière plastique de l'arbre (1) est composée de polyoxyméthylène, polyamide, polybutylène téréphtalate, polysulfure de phénylène, polyétheréthercétone ou polypropylène.
